# EUROPEAN PATENT SPECIFICATION

(11) **EP 1 223 329 B1**
(45) Date of publication and mention of the grant of the patent: **20.07.2005**
(21) Application number: 01130446.6
(22) Date of filing: 20.12.2001
(51) Int. Cl.: F02D 41/30, F02D 41/40

(54) **Fuel injection control device and method for direct injection spark-ignition engine**
Kraftstoffeinspritz-Vorrichtung und Verfahren für eine fremdgezündete direkteinspritzende Brennkraftmaschine
Appareil et procédé de commande de l'injection de carburant pour un moteur à allumage commandé avec injection directe

(30) Priority: 09.01.2001 JP 2001001528
(43) Date of publication of application: 17.07.2002
(73) Proprietor: NISSAN MOTOR CO., LTD., Yokohama-shi Kanagawa-ken (JP)
(72) Inventor: Ishii, Hitoshi, Yokosuka-shi, Kanagawa (JP)
(74) Representative: Grünecker, Kinkeldey, Stockmair & Schwanhäusser Anwaltssozietät

(56) References cited:
- EP-A- 0 905 360
- EP-A- 1 108 877
- DE-A- 19 815 266
- US-A- 5 740 776
- PATENT ABSTRACTS OF JAPAN vol. 2000, no. 05, 14 September 2000 (2000-09-14) & JP 2000 054881 A (MAZDA MOTOR CORP), 22 February 2000 (2000-02-22)

## Description

This invention relates to a fuel injection control device for a direct injection engine according to the preamble of independent claim 1 and to a fuel injection control method for a direct injection engine according to the preamble of independent claim 8.

### BACKGROUND OF THE INVENTION

In a direct injection engine, stratified charge combustion is generally performed in a predetermined operating range. During stratified charge combustion, a fuel spray directly injected into the combustion chamber by a fuel injection valve during a compression stroke is ignited after flowing into proximity to a spark plug. This type of direct injection engine is disclosed in Tokkai 2000-87750 published in Japanese Patent Office in 2000.

During stratified charge combustion, a concentrated air-fuel mixture which is unevenly distributed in proximity to a spark plug is combusted by ignition. When fuel injected in response to a fuel injection pulse signal is diffused before reaching the spark plugs, a section of the air-fuel mixture in proximity to the spark plug has not reached an ignitable concentration. In this case, since flame propagation does not spread out even after ignition, preferred stratified charge combustion characteristics are not realized. In other words, stable stratified charge combustion is ensured only when an air-fuel mixture resulting from a fuel spray expands into proximity to the spark plugs at a fuel mixture concentration which is higher than an ignitable concentration.

The concept of a degree of charge stratification of the air-fuel mixture is used in order to express the concentration of air-fuel mixture resulting from a fuel spray when in proximity to a spark plug. The degree of charge stratification of the air-fuel mixture is high when the air-fuel mixture in proximity to the spark plug comprises a dense population of coexisting fuel particles. Conversely the degree of charge stratification is low when fuel particles making up the air-fuel mixture in proximity to the spark plug are spread out. It is preferred that an engine which performs stratified charge combustion has a high degree of charge stratification of the air-fuel mixture.

Tokkai Hei 11-82030 published by the Japanese Patent Office in 1999 discloses a direct injection engine which performs a plurality of injection operations during the compression stroke.

For example, a fuel injection pulse signal outputted during compression stroke is divided into three parts. Here, a first injection pulse width T1 of the divided injection pulse signal is adapted to be longer than a second injection pulse width T2 and a third pulse width T3. In turn, the second injection pulse width T2 is longer than the third pulse width T3. Furthermore a first pulse stop width I1 is shorter than a second pulse stop width I2 and the second pulse stop width I2 is shorter than a third pulse stop width I3.

In the conventional technique, the second and third fuel injection operations are subordinate to the first fuel injection. As the fuel injection amount due to the first fuel injection pulse signal increases, the behavior of the air-fuel mixture replicates the behavior of an air-fuel mixture resulting from fuel injection which is not divided (only a single injection). The dimensions of the mixture cloud increases with increase in the first fuel injection pulse width. As a result, it is sometimes the case that the conventional technique has little effect on the improvement in the degree of charge stratification of the air-fuel mixture.
A fuel injection control device for a direct injection engine and a fuel injection control method for a direct injection engine as indicated above can be taken from prior art document US 5,740,776 wherein fuel is injected into a combustion chamber during compression stroke by a main fuel volume injection and an ignition fuel volume injection. Said main injection timing is set in accordance with engine load while the ignition fuel injection is carried out in a fixed range.
It is an objective of the present invention to provide a fuel injection control device for a direct injection engine and a fuel injection control method for a direct injection engine as indicated above, wherein a stable stratified charge combustion can be performed.
According to the present invention said objective is solved by a fuel injection control device for a direct injection engine having the features of independent claim 1.
Preferred embodiments are laid down in the dependent claims.
According to the present invention said objective is solved by a fuel injection control method for a direct injection engine as indicated above having the features of independent claim 8.

The controller functions to output a fuel injection pulse signal for opening a fuel injection valve during the compression stroke; the fuel injection pulse signal comprising a first injection pulse and a second injection pulse, the signals having substantially the same pulse width; and set a fuel injection interval which is the interval between the first fuel injection pulse and the second fuel injection pulse in response to an engine rotation speed so that a second mixture cloud produced by a fuel spray injected on the basis of the second fuel injection pulse follows after and is superimposed on a first mixture cloud produced by a fuel spray injection on the basis of the first fuel injection pulse, the two mixture clouds being superimposed in proximity to a spark plug at the ignition timing.

The principle of rapid-succession double fuel injection is applied to discrete double fuel injection in the compression stroke. Since the conventional technique does not apply a principle of rapid-succession double injection in contrast to this invention, this invention has a technical concept different from that of the conventional technique on a method of increasing the degree of charge stratification. The principle of rapid-succession double fuel injection is as follows: the travel speed of the mixture cloud produced by the fuel spray of the second fuel injection greater than the travel speed of the mixture cloud produced by the fuel spray of the first fuel injection because air flow generated by the fuel injected during the first injection reduces the pressure near the fuel injection valve.
Hereinafter the present invention is illustrated and explained by means of preferred embodiments in conjunction with the accompanying drawings. In the drawings wherein:

FIG. 1 is a schematic view of a direct injection engine according to a preferred embodiment. FIG. 1A is a lateral view and FIG. 1B is an upper view.

FIG. 2 shows a fuel spray injected from a fuel injection valve and tumble flow which interferes with the fuel spray: FIG. 2A is a lateral view and FIG. 2B is an upper view.

FIG. 3 is a first map showing the operating range of a direct injection engine.

FIG. 4 is a schematic diagram of a control system for a direct injection engine.

FIG. 5 is a second map showing the relation between the engine rotation speed and the required fuel injection interval.

FIG. 6 shows the influence of fuel pressure in during discrete double injection: FIG. 6A shows the behavior of two mixture clouds at high fuel pressure and FIG. 6B shows that at low fuel pressure.

FIG. 7 is a third map showing the relation between the engine rotation speed and a target fuel pressure.

FIG. 8 is a flowchart showing the routine for setting a target fuel pressure and fuel injection pulse widths.

FIG. 9 is a flowchart showing the routine for setting the fuel injection timing.

FIG. 10 is a waveform diagram showing a fuel injection pulse signal.

FIG. 11 shows the behavior of mixture clouds produced by fuel spray into the combustion chamber.

In this specification the valve opening timing (fuel injection timing), the valve opening period (injection interval) and ignition timing are expressed in crank angle.

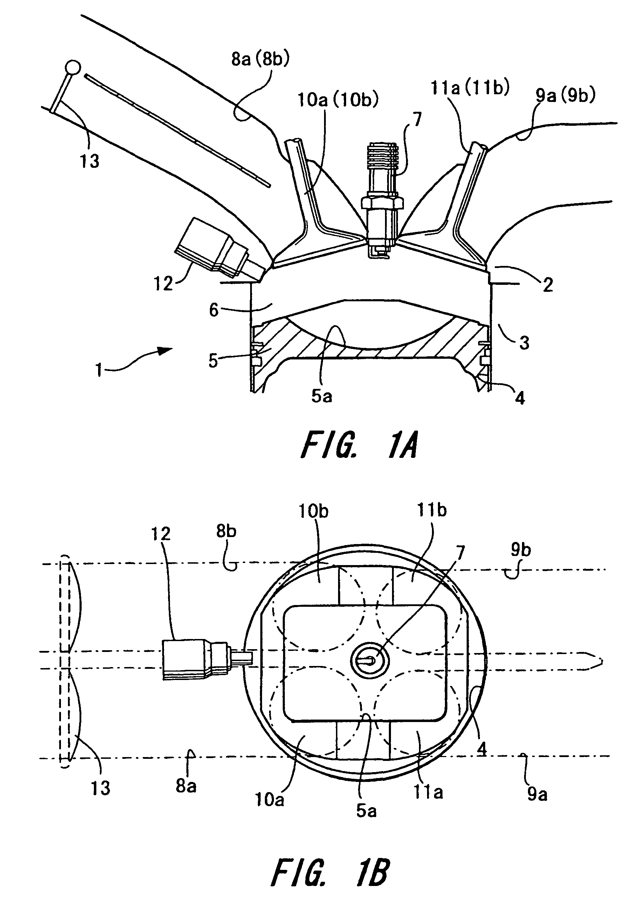

Referring to FIG. 1 of the drawings, a direct injection engine 1 according to this embodiment comprises a cylinder head 2, a cylinder 4 formed in a cylinder block 3, and a piston 5 which slidably moves in the cylinder 4. The cylinder 4 and the piston 5 define a combustion chamber 6. An ignition plug 7 is positioned in the central section of the combustion chamber 6. The combustion chamber 6 is a pent roof type. A pair of intake ports 8a, 8b and a pair of exhaust ports 9a, 9b are disposed in mutually opposed positions sandwiching the spark plug 7 on the ceiling of the combustion chamber 6. A pair of intake valves 10a, 10b open and close the opening of the intake ports 8a, 8b. A pair of exhaust valves 11a, 11b open and close the opening of the exhaust ports 9a, 9b.

A fuel injection valve 12 is disposed on the ceiling of the combustion chamber 6, laterally facing the combustion chamber. The fuel injection valve 12 is positioned between each intake port 8a, 8b on a lateral side of each intake valve 10a, 10b in order to face the combustion chamber 6.

The fuel injection valve 12 injects a fuel spray into the combustion chamber 6 with timing determined by a fuel injection pulse signal. The fuel spray mixes with air aspirated into the cylinder 4 from the intake ports 8a, 8b when each intake valve 10a, 10b is opened. The air-fuel mixture formed in the cylinder 4 is ignited by the spark plug 7 when compressed by the piston 5. The combustion gas depresses the piston 5 and provides a rotational force for the crankshaft. Thereafter when the exhaust valves 11a, 11b are opened during the exhaust stroke in which the piston 5 ascends, combustion gas is exhausted from each exhaust port 9a, 9b, and then the stroke cycle is continuously repeated.

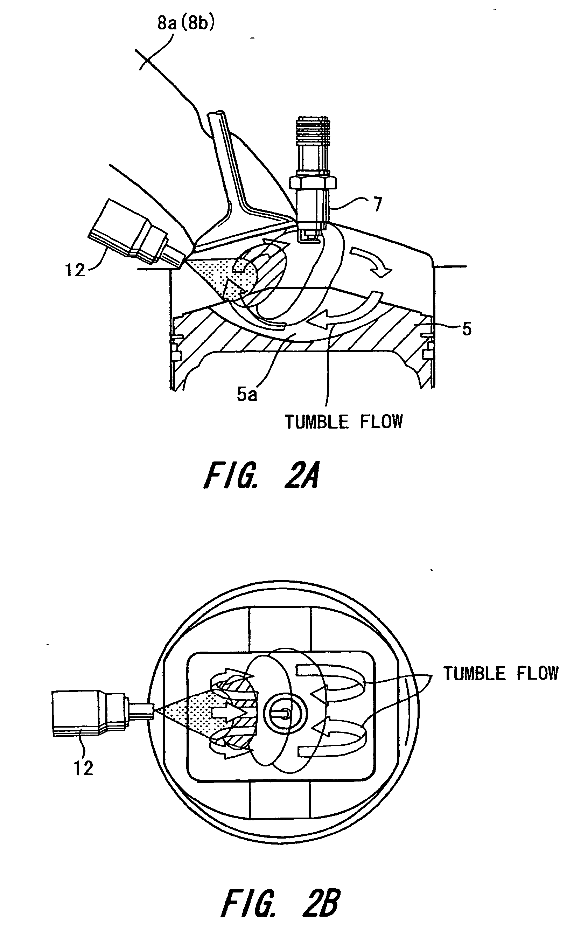

Intake air branches equally into the respective intake ports 8a, 8b and flows into the cylinder 4. Each intake port 8a, 8b is provided with a tumble control valve 13 at a midway position. When the tumble control valve 13 is closed, intake air flows into the upper half of each intake port 8a, 8b as shown in FIG. 1A and the flow speed of the intake air is increased. Even when the direct injection engine is not operating in a high rotation speed region or a high load region, tumble flow about an axis orthogonal to the center axis of the cylinder 4 is produced with a sufficient strength in the upper section of the head of the cylinder 5 as shown by an arrow in FIG. 2A. The tumble flow undergoes swirl in a longitudinal direction. A cavity 5a in the shape of a shallow bowl is formed in the piston head in order to assist the tumble flow. FIG. 2B shows the tumble flow rising from the bottom of the cavity 5a. In FIG. 2B, the tumble flow is represented with an incline in order to facilitate description.

The direction of fuel injection of the fuel injection valve 12 is set to substantially the same direction as the direction of the tumble flow resulting from air intake. Referring to FIG. 2, the fuel spray injected from the fuel injection valve 12 spreads out in the shape of an imaginary circular cone about the center of the fuel injection valve 12. The fuel spray is lead by the tumble flow towards the spark plug 7 and forms an ignitable mixture cloud at that point. Therefore stable stratified charge combustion operation is possible by igniting the mixture cloud reaching the proximity of the spark plug 7.

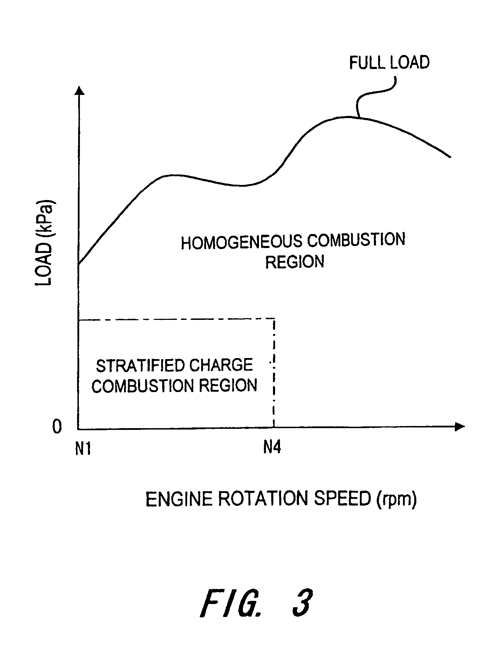

Referring to the first map shown in FIG. 3, the stratified charge combustion region of the direct injection engine 1 is positioned towards low rotation speeds and low load. In FIG. 3, the load is expressed as a brake mean effective pressure. For example, the stratified charge combustion region lies below the engine rotation speed of 3,600 rpm and below the brake mean effective pressure of 500-700 kPa.

In contrast, in homogeneous combustion regions determined by the first map in FIG. 3 (high rotation speed regions or high load regions), a strong tumble flow is produced in the combustion chamber 6 even when the tumble control valve 13 is open. In the homogeneous combustion region, the direct injection engine 1 produces a homogeneous air-fuel mixture in the entire combustion chamber 6 by injecting fuel during the intake stroke with the tumble control valve 13 open in order to perform homogeneous combustion.

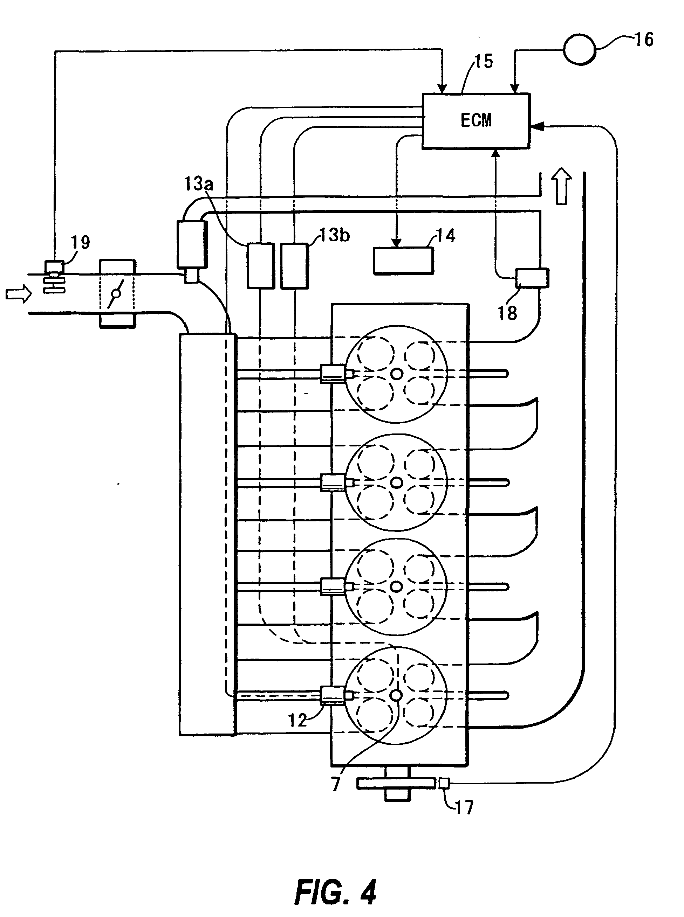

Referring to FIG. 4, the control system for the direct injection engine according to this embodiment is provided with a spark plug 7, a fuel injection valve 12, a tumble control valve 13, a pressure regulator 14, a controller (ECM) 15, an accelerator pedal sensor 16, a crank angle sensor 17, an oxygen concentration sensor 18, and an airflow meter 19. The accelerator pedal sensor 16 detects the amount of accelerator pedal depression. The crank angle sensor 17 detects an engine rotation speed and a crank angle. The oxygen concentration sensor 18 and the airflow meter 19 are used for the air-fuel ratio control.

The controller 15 is provided with a microprocessor having a central processing unit (CPU), a random access memory (RAM), a read only memory (ROM) and an input/output interface (I/O interface).

A signal that is representative of the accelerator pedal depression amount from an accelerator pedal sensor 16, a signal showing a reference position and a position signal at 1 degree CA intervals from a crank angle sensor 17 are input to the controller 15. The amount of accelerator pedal depression corresponds to the engine load. The signal showing the reference position is a signal for controlling the ignition timing or the fuel injection period.

The controller 15 controls the valve opening timing of the fuel injection valve 12, namely the fuel injection timing, and the valve opening period, namely the fuel injection amount. The controller 15 outputs a pulse signal corresponding to the calculated fuel injection amount to a drive circuit (not shown) of the fuel injection valve 12. Thereafter a drive current corresponding to the pulse signal is sent to the actuator of the fuel injection valve 12 from the drive circuit and the nozzle hole is opened by lifting a needle disposed in the fuel injection valve 12. As the fuel injection pulse width lengthens, the valve opening period of the fuel injection valve 12 lengthens and the fuel injection amount is increased.

The ROM of the controller 15 stores a first map determining an operating range of the direct injection engine 1. When determining that the engine rotation speed and the engine load are in a homogeneous combustion region of the first map, the controller 15 sets the fuel injection timing to the intake stroke during which the piston is depressed. The controller 15 controls the air-fuel ratio in a narrow range about a stoichiometric air-fuel ratio in a homogeneous combustion region.

On the other hand, when determining that the engine rotation speed and the engine load are in the stratified charge combustion region of the first map, the controller 15 sets the fuel injection timing to the latter half of the compression stroke during which the piston 5 ascends. In this case, the air-fuel ratio is controlled to a leaner value than the stoichiometric air-fuel ratio. The controller 15 controls the air-fuel ratio based on signals from the crank angle sensor 17, the oxygen concentration sensor 18, and an airflow meter 19.

In the stratified charge combustion region, the controller 15 generates a fuel injection pulse signal comprising a first injection pulse and a second injection pulse having equal pulse widths. That is to say, fuel injection during the compression stroke in the stratified charge combustion region is performed equally on two occasions. Hereafter this type of fuel injection is termed discrete double injection.

The fuel injection pulse signal is set so that a first mixture cloud formed from a fuel spray injected on the basis of a previous first fuel injection pulse reaches the proximity of the spark plugs at the ignition timing. The fuel injection pulse signal is further set so that a second mixture cloud formed from a fuel spray injected on the basis of a second fuel injection pulse successively follows the previously generated mixture cloud into proximity with the spark plug. This is enabled by adapting the engine fuel injection technique so that the principle of rapid-succession double fuel injection is applied to discrete double fuel injection in the compression stroke. In this manner, two mixture clouds become superimposed in proximity to the spark plugs at the ignition timing. As a result, the overall dimensions of the mixture cloud are nearly halved and the degree of charge stratification is raised in comparison to the situation in which only a single fuel injection is performed during the compression stroke. The increase in the degree of charge stratification of the air-fuel mixture has been confirmed experimentally.

The principle of rapid-succession double fuel injection will be described below. Air flow generated by the fuel injected during the first injection reduces the pressure near the fuel injection valve. When the second fuel injection is performed without providing a large fuel injection interval, fuel injected during the second injection is sucked into proximity with the fuel injection valve. This phenomenon makes the travel speed of the mixture cloud produced by the fuel spray during the second fuel injection greater than the travel speed of the mixture cloud produced by the fuel spray during the first fuel injection.

The pulse signal output during the compression stroke is divided into two signals of substantially equal pulse width in order to apply the principle to rapid-succession double injection. In this case, immediately after completion of discrete fuel injection, the two mixture clouds produced from respective fuel sprays separately progress towards the spark plugs. Thereafter the latter (hereinafter second) mixture cloud follows the previously generated (hereinafter first) mixture cloud. After a certain period of time from completion of discrete fuel injection, the latter mixture cloud catches up with the first mixture cloud and the two clouds become superimposed. When some time elapses after this state, the second mixture cloud overtakes the first mixture cloud and elongates the superimposed mixture cloud.

The degree of charge stratification can be increased to a degree higher than that obtained by a single fuel injection which does not perform discrete fuel injection when the two mixture clouds are superimposed in proximity to the spark plugs at the ignition timing. Thus, the direct injection engine can perform stratified charge combustion with stability.

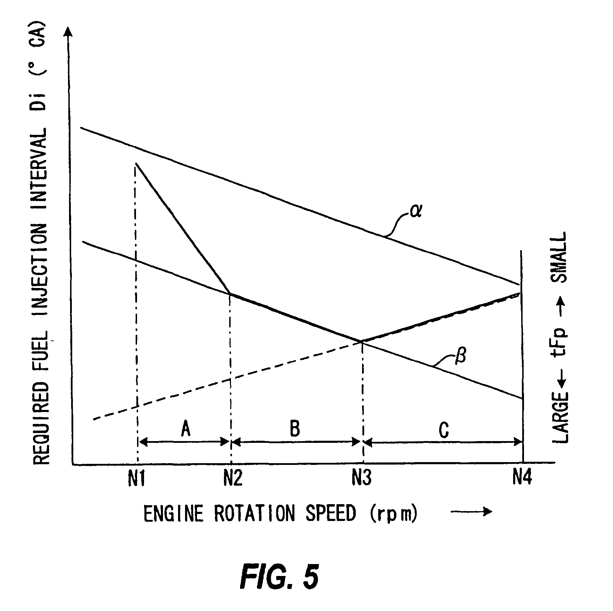

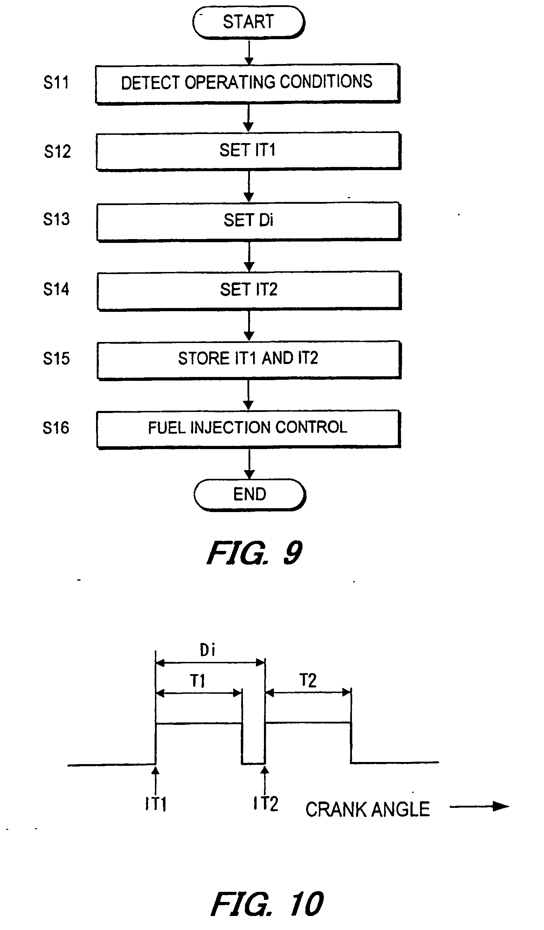

In the stratified charge combustion region, the fuel injection interval Di required to superimpose the two mixture clouds in proximity to the spark plugs 7 at the ignition timing is varied in response to the engine rotation speed. According to this teaching, the controller 15 computes a required fuel injection interval Di in response to the engine rotation speed by looking up a second map as shown in FIG. 5 in order to superimpose the two mixture clouds in proximity to the spark plugs 7 at the ignition timing in all stratified charge combustion regions. The second map is stored in the ROM of the controller 15 and specifying the relation of the engine rotation speed and the required fuel injection interval Di. As shown in FIG. 10, the required fuel injection interval Di corresponds to the onset interval of the two injection pulse and is expressed as a crank angle (degree CA).

Referring to FIG. 5, a different relation between the engine rotation speed and the required injection interval Di shown by the thick solid line is set in region A from the first engine rotation speed N1 to the second engine rotation speed N2, in region B from the second engine rotation speed N2 to the third engine rotation speed N3, and in region C from the third engine rotation speed N3 to the fourth engine rotation speed N4. For example, the first, second, third, and fourth speed (N1, N2, N3, and N4) are preset to be 600, 1,200, 2,000, 3,600 rpm.

In the lowest rotation speed region (region A), the required fuel injection interval Di is set to increase with decrease in engine rotation speed.

This is for the following reason. When it is assumed that the fuel injection timing and the ignition timing are fixed, the time from the completion of fuel injection to the ignition timing increases with decrease in engine rotation speed. As a result, if the fuel injection interval at low rotation speeds equals the fuel injection interval at a high rotation speed, the two mixture clouds become superimposed before the spark plug during operation at a low rotation speed. Consequently the two mixture clouds have diverged once again when in proximity to the spark plugs. Therefore it is necessary to delay superimposing the two mixture clouds by lengthening the fuel injection interval as the engine rotation speed decreases.

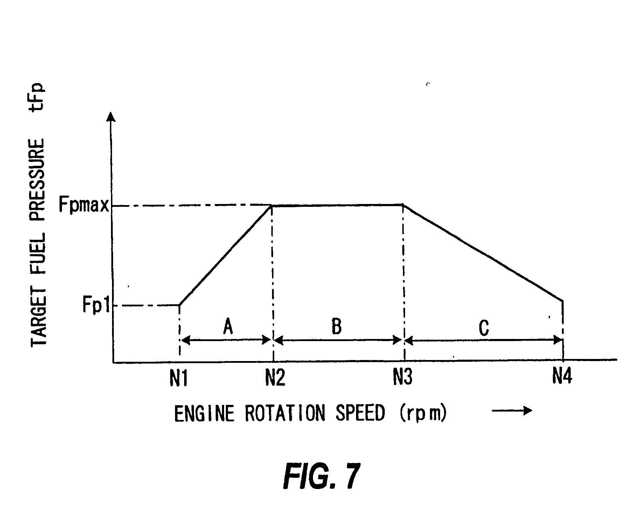

Furthermore the controller 15 sets a target fuel pressure tFp for injected fuel in response to the engine rotation speed based on a third map as shown in FIG. 7. The third map is stored in the ROM of the controller 15 and specifies the relation of the engine rotation speed and the target fuel pressure tFp. A target fuel pressure tFp is set so that stratified charge combustion is suitably produced when the fuel injection interval corresponds to the required fuel injection interval Di.

In region A, the fuel pressure supplied to the fuel injection valve is set according to the required fuel injection interval Di in order to enable a required fuel injection interval Di which varies in response to the engine rotation speed. The reason for this will be described hereafter.

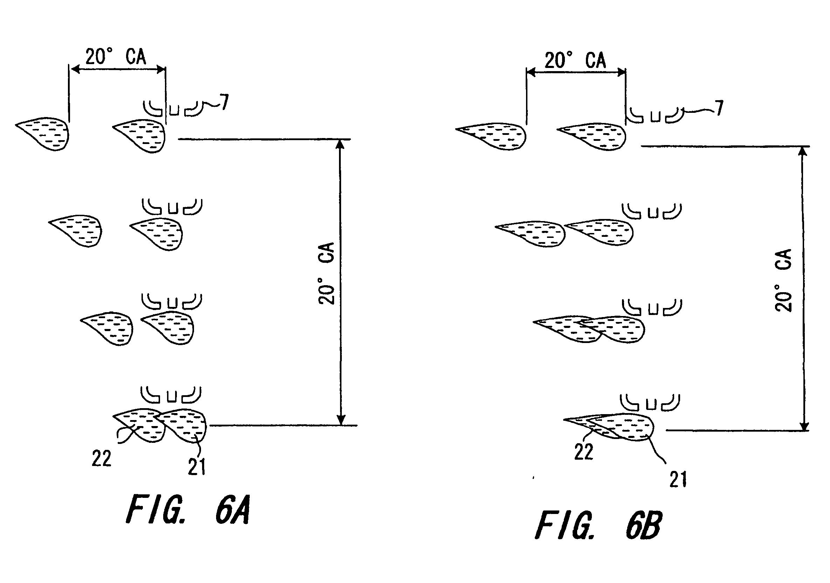

FIG. 6 shows a model comparison of the movement of two mixture clouds corresponding to a first and second fuel injection. The mixture clouds are identical with respect to the fuel injection amount, fuel injection timing and ignition timing and only differ with respect to fuel pressure. At both low fuel pressure and high fuel pressure, the interval between the first and second fuel injection is 20 degrees CA and the crank angle from completion of discrete fuel injection to the ignition timing is approximately 20 degrees CA. However the difference of fuel pressure results in a difference in the manner in which the two mixture clouds reach the proximity of the spark plugs 7.

FIG. 6 shows two mixture clouds immediately after completion of discrete fuel injection at the uppermost stage as shown in the figure. The lowest stage in the figure shows the two mixture clouds at the ignition timing with the downward passage of the two mixture clouds shown therebetween.

Referring to FIG. 6A, when the fuel pressure is higher than an optimal fuel pressure, the travel speed of the first mixture cloud 21 (the mixture cloud resulting from a fuel spray injection by the first pulse) is more rapid than during low fuel pressure conditions. As a result, after the ignition timing, the first mixture cloud 21 has slightly passed through the spark plug 7 before the second mixture cloud 22 (the mixture clouds resulting from a fuel spray injection by the second pulse signal) catches up (refer to the lowest stage in FIG. 6A). After the crank angle is increased, the second mixture cloud 22 catches up to the first mixture cloud 21 and both mixtures become superimposed. Thus as shown in FIG. 6A, the fuel pressure becomes excessively high in this case.

On the other hand, the travel speed of the first mixture cloud 21 is delayed when the fuel pressure is reduced. Referring to FIG. 6B, at a suitable fuel pressure, the first mixture cloud 21 reaches the proximity of the spark plug at the ignition timing. At the same time, the second mixture cloud 22 reaches the proximity of the spark plug in the same manner and both mixture clouds become superimposed (refer to the lowermost stage in FIG. 6B).

Therefore it is clear that the two mixture clouds become superimposed at the position closer to the fuel injection valve as the fuel pressure is reduced. As shown in the third map of FIG. 7, in order to make a required fuel injection interval Di available, the target fuel pressure tFp is reduced with decrease in engine rotation speed in the region A. Thus the target fuel pressure Fp1 at a minimum rotation speed N1 (for example 600 rpm) of the engine becomes the lowest value in the region A. Furthermore, as shown in FIG. 5, the target fuel pressure tFp has a tendency of decreasing with increase in the required fuel injection interval Di.

The target fuel pressure tFp increases as the engine rotation speed increases from the minimum rotation speed N1. However an upper limit Fpmax on the fuel pressure exists due to the operational capacity of the fuel supply device. The fuel supply device is provided with a fuel pump (not shown) for pumping fuel under pressure and a pressure regulator 14 which is provided downstream of the fuel pump and which maintains the fuel pressure to a regulated value. As a result, there is a lower limit on the required fuel injection interval Di resulting from the upper limit Fpmax for fuel pressure. The required fuel injection interval Di must be larger than or equal to this lower limit. The lower limit of the required fuel injection interval Di is shown by the thin solid line β in FIG. 5. The lower limit on the required fuel injection interval Di decreases with increase in engine rotation speed.

When the engine rotation speed rises to the second speed N2, the required fuel injection interval Di reaches the thin solid line β and the fuel pressure does not undergo further increase. Thus in the present embodiment, when the engine rotation speed reaches values greater than or equal to the second speed N2 (for example 1,200 rpm), the required fuel injection interval Di is set to a lower limit corresponding to the fuel pressure upper limit Fpmax.
In addition, an upper limit on the required fuel injection interval Di exists resulting from the existence of the fuel pressure lower limit Fpmin. The thin solid line α in FIG. 5 expresses the upper limit of the required fuel injection interval Di corresponding to the fuel pressure lower limit Fpmin. Thus it is necessary to restrict the required fuel injection interval Di to values between the thin solid line α and the thin solid line β.

Furthermore, there is a lower limit on the required fuel injection interval Di caused by the response delay resulting from driving the fuel injection valve. The broken line in the lower section of FIG. 5 represents the minimum value required for driving the fuel injection valve 12, that is to say, the minimum value resulting from the response delay in driving the fuel injection valve. The reason for the existence of the minimum value will be described in detail below.

When performing discrete fuel injection, it is necessary to start the second fuel injection after completion of the first fuel injection. However when the time interval from completion of the first fuel injection to starting the second fuel injection is short, the injection hole of the fuel injection valve 12 is not completely closed as a result of the response delay in the actuator. As a result, since the second fuel injection continues without a break after the first fuel injection, it is not possible to perform discrete fuel injection.

In other words, there is a minimum value with respect to the time interval from the completion of the first fuel injection to starting the second fuel injection. When this time interval is shorter than the minimum value, it is not possible to perform discrete fuel injection. The time required to drive the fuel injection valve corresponds to the minimum value. Thus the region below the broken line in FIG. 5 is where discrete fuel injection is not possible. As shown by the broken line, the lower limit on the required fuel injection amount Di generated as a result of the response delay in driving the fuel injection valve increases in response to the engine rotation speed.

The broken line and the thin solid line β corresponding to the upper limiting value on the fuel pressure intersect at the third speed N3 (for example 2,000 rpm). Thus in this embodiment, when in a rotation speed region where the engine rotation speed is greater than the third speed N3 (region C), the required fuel injection interval Di is set to a lower limit resulting from the response delay in driving the fuel injection valve. When the engine rotation speed is greater than or equal to the third speed N3, the required fuel injection interval Di is increased with increasing engine rotation speed as shown by the broken line.

In region C, the target fuel pressure tFp is varied in order to enable a required fuel injection interval Di. As shown in FIG. 7, the target fuel pressure tFp is decreased with increasing engine rotation speed in region C. The fourth speed N4 (for example 3,600 rpm) is an engine rotation speed which determines the boundary for the stratified charge combustion region and the homogeneous combustion region. Thus the required fuel injection interval Di is set when the engine rotation speed is less than the fourth speed N4 in the second map in FIG. 5.

In summary, the characteristics of the target fuel pressure tFp in response to the engine rotation speed will be described below. Referring to FIG. 7, the target fuel pressure increases with increasing engine rotation speed from an engine rotation speed N 1 to N2. The target fuel pressure tFp is fixed to the upper limiting value between an engine rotation speed N2 to N3. The target fuel pressure tFp decreases with increasing engine rotation speed from an engine rotation speeds N3 to N4.

For the purposes of simplicity, the characteristics of the required fuel injection interval Di in region A are shown as linear in FIG. 5 and FIG. 7. However those characteristics are not limited in this regard and may be curved.

The controller 15 controls the ignition timing of the spark plug 7 in response to operating conditions. In the stratified charge combustion region, since the optimal ignition timing varies in response to the engine rotation speed or the load, the controller 15 calculates an optimal ignition timing in response to engine rotation speed and load. An ignition signal for realizing the calculated ignition timing is output to the drive circuit of the ignition coils 13a, 13b shown in FIG. 4. Sparking occurs between the electrodes of the spark plug 7 based on the ignition signal.

When the ignition timing is varied in response to the engine rotation speed in the stratified charge combustion region, the required fuel injection interval Di is affected. Therefore the actual value of the required fuel injection interval Di shown in FIG. 5 is determined by experiments taking the ignition timing into account.

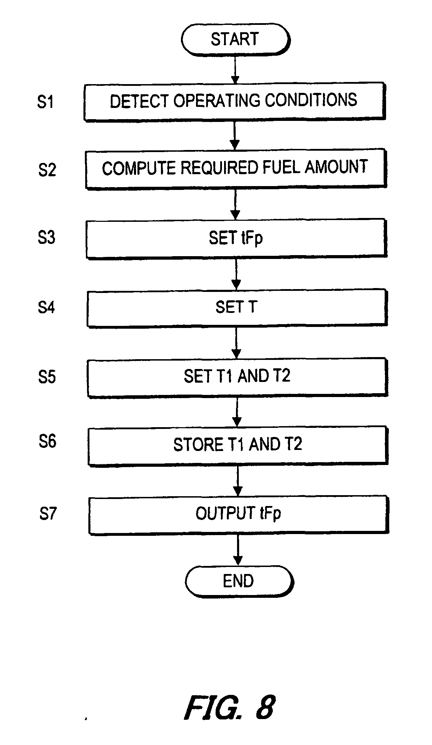

Referring to the flowchart in FIG. 8, a routine for setting the target fuel pressure tFp and the respective fuel injection pulse widths T1, T2 of the fuel injection pulse signal divided into two injections in the stratified charge combustion region will be described. This routine is executed by the controller 15 at predetermined intervals, for example at intervals of 10 milliseconds.

Firstly in a step S1, operating conditions such as the engine rotation speed Ne and the engine load are detected. Then in a step S2, the required fuel amount per cylinder is computed on the basis of the operating conditions.

In a step S3, the target fuel pressure tFp during discrete fuel injection is set on the basis of the engine rotation speed Ne by looking up a third map as shown in FIG. 7. In a step S4, a total fuel injection pulse width T is set in order to supply a required fuel amount with the target fuel pressure tFp.

In a step S5, 1/2 of T is set as a fuel injection pulse width T1 for the first fuel injection and 1/2 of T is set as a fuel injection pulse width T2 for the second fuel injection. That is to say, the division ratio of the first fuel injection and the second fuel injection is 1:1. Of course T1 + T2 = T. In a step S6, T1 and T2 are stored in the register of the CPU.

In a step S7, a target fuel pressure tFp is output to the drive circuit of the pressure regulator 14. The fuel pressure is regulated by the duty-controlled pressure regulator 14. Thus the drive circuit of the pressure regulator 14 performs duty control in order to obtain a target fuel pressure tFp.

Referring to FIG. 9, a routine will be described below for setting the onset timing IT1, IT2 of the fuel injection pulse signal which is divided into two in the stratified charge combustion region. That is to say, the fuel injection start timings for the first and second injection are set. The routine is executed by the controller 15 at a predetermined interval, for example 10 milliseconds.

Firstly in a step S11, operating conditions such as the engine rotation speed Ne and engine load are detected. Then in a step S12, a first fuel injection start timing IT1 [degree CA BTDC] is set on the basis of operating conditions. In a step S13, a required fuel injection interval Di [degree CA] is set by looking up a second map shown in FIG. 5 based on the engine rotation speed Ne. In a step S14, a value delayed from the first fuel injection start timing IT1 by the required fuel injection interval Di is set as a second fuel injection start timing IT2 [degree CA BTDC]. In a step S15, the two fuel injection start timings IT1, IT2 are stored in the register of the CPU. The two fuel injection start timings IT1, IT2 are naturally set in the compression stroke.

In a step S16, the controller 15 executes a fuel injection control. In the fuel injection control, a fuel injection pulse signal consisting of the two fuel injection pulse is produced as shown in FIG. 10 based on the fuel injection start timing IT1, IT2 and fuel injection pulse widths T1, T2 stored in the register of the CPU. The controller 15 outputs this fuel injection pulse signal to the drive circuit of the fuel injection valve 12.

The effect of this embodiment will be summarized below.

In this embodiment, a required fuel injection interval Di is determined for the two fuel injection so that the two mixture clouds are superimposed in proximity to the spark plug 7 at the ignition timing, by applying the principle of rapid-succession double fuel injection. In this embodiment, since the first and second fuel injection pulse widths T1, T2 correspond to half the pulse width T of a single injection, the dimensions of the mixture clouds when superimposed are approximately half those resulting from a single (non-divided) injection pulse single.

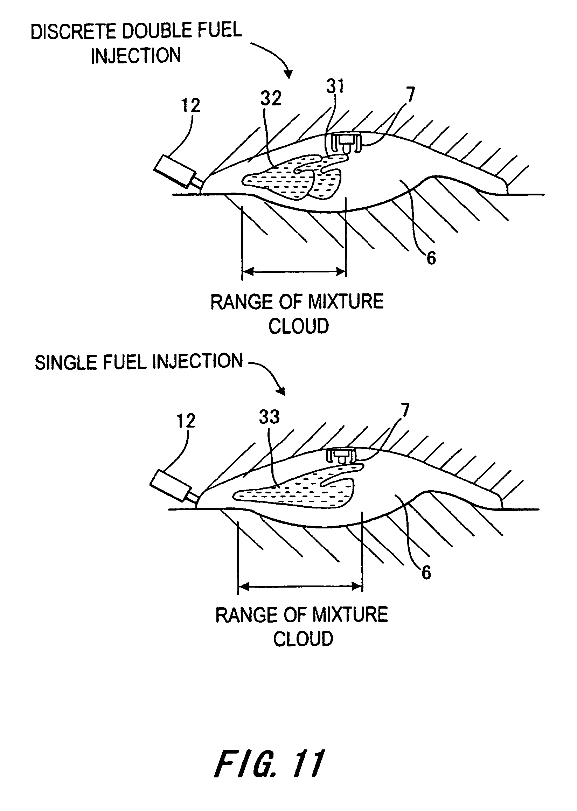

The schematic shape taken by the mixture cloud in the combustion chamber 6 will be described below referring to FIG. 11. Reference numeral 31 shown in the upper panel denotes the first mixture cloud and that designated by the reference numeral 32 is the second mixture cloud. The overall range in the dimensions of the mixture cloud is more narrow when two mixture clouds 31, 32 are produced by discrete double fuel injection as shown in the upper panel than a mixture cloud 33 produced by a single fuel injection as shown in the lower panel.

In this embodiment, the two mixture clouds produced by a fuel spray injection due to a first and a second fuel injection pulse are superimposed in proximity to the spark plug at the ignition timing. Thus since the degree of charge stratification of the air-fuel mixture is increased, it is possible for a direct injection engine according to this embodiment to perform stratified charge combustion in a more stable manner than a conventional direct injection engine.

In region A near the lowest rotation speed shown in FIG. 5, low engine rotation speeds tend to lengthen the time from completion of the fuel injection to the ignition timing. As a result, in region A, the required fuel injection interval increases with decreasing engine rotation speed. Since the routine is adapted to delay superimposition of the two mixture clouds, in region A, it is possible superimpose the two mixture clouds in proximity to the spark plug at the ignition timing.

Furthermore it is possible to shorten the fuel injection interval to the greatest extend in a rotation speed region (region B in FIG. 5) where the required fuel injection interval Di is set to a fuel injection interval corresponding to the upper limit of the fuel pressure.

In a rotation speed region (region C in FIG. 5) where a limiting value resulting from the required time for driving the fuel injection valve is set as a required fuel injection interval Di, it is possible to ensure a minimum fuel injection interval and perform discrete double fuel injection applying the principle of rapid-succession double injection.

In this embodiment, an air guide is employed as a method of introducing an air-fuel mixture from a fuel injection valve 12 to the spark plug 7. However this teaching is not limited in this respect and it is possible to apply the teaching to a direct injection engine with a wall guide.

An air guide is a system of generating a tumble flow (swirl in a longitudinal direction) in air flowing into the combustion chamber 6 from the intake ports 8a, 8b by closing the tumble control valve 13 (gas flow generating means). The shape of a cavity provided on the piston head and the angle of incidence of intake air flowing into the combustion chamber 6 from the intake ports 8a, 8b is determined so that fuel injected from the fuel injection valve 12 enters the tumble flow and is transported to the spark plug 7.

On the other hand, a wall guide is a different method of transporting an air-fuel mixture into proximity to the spark plug and comprises a system of using a swirl flow (swirl in a lateral direction) generated by the gas flow generating means. The swirl flow leads an air-fuel mixture resulting from the fuel spray along the wall of the cavity provided as an indentation on the piston head to the proximity of the spark plugs. The wall guide system is disclosed in Tokkai Hei 10-339138 published by the Japanese Patent Office.

In this embodiment, a fuel injection pulse signal generated during the compression stroke in the stratified charge combustion region consists of two pulses having exactly the same fuel injection pulse width. However the fuel injection pulse widths of the first and second pulses may be different to a certain degree.

In this embodiment, the onset interval of the two fuel injection pulses as shown in FIG. 10 has been expressed as a fuel injection interval. However the interval from the onset of the first fuel injection pulse to the onset of the second fuel injection pulse (that is to say, the interval from the right end of T1 to IT2) may be expressed as the fuel injection interval.

## Claims

1. A fuel injection control device for a direct injection engine (1) which performs stratified charge combustion in a predetermined operating region, the fuel injection control device being provided with a spark plug (7) for igniting an air-fuel mixture in the cylinder (4), and a fuel injection valve (12) for injecting fuel into the cylinder (4), the control device comprising:
a crank angle sensor (17) for detecting an engine rotation speed; and
a controller functioning to:
output a fuel injection pulse signal for opening a fuel injection valve (12) during the compression stroke; the fuel injection pulse signal comprising a first injection pulse and a second injection pulse, and
set a fuel injection interval (Di) which is the interval between the first fuel injection pulse and the second fuel injection pulse, wherein
a second mixture cloud (22) produced by a fuel spray injected on the basis of the second fuel injection pulse follows after and is superimposed on a first mixture cloud (21) produced by a fuel spray injection on the basis of the first fuel injection pulse, the two mixture clouds (21, 22) being superimposed in proximity to a spark plug (7) at the ignition timing,
**characterized in that**
the first injection pulse and the second injection pulse having substantially the same pulse width (T1, T2); and
said fuel injection interval (Di) is set in response to an engine rotation speed so that the fuel injection interval (Di) is greater than or equal to a lower limiting value (β) determined based on an upper limiting value for fuel pressure (Fpmax).

2. A fuel injection control device for a direct injection engine according to claim 1, **characterized in that** the controller (15) further functions to:
set the fuel injection interval (Di) so that the fuel injection interval (Di) increases with decrease in the engine rotation speed.

3. A fuel injection control device for a direct injection engine according to claim 1 or 2, **characterized in that** the controller (15) further functions to:
set a fuel pressure (tFp) for fuel supplied to the fuel injection valve (12) on the basis of the engine rotation speed in order to enable the fuel injection interval (Di), the set fuel pressure (tFp) increasing with decreasing fuel injection interval (Di) in a predetermined range of the engine rotation speed.

4. A fuel injection control device for a direct injection engine according to at least one of the claims 1 to 3, **characterized in that** the controller (15) further functions to:
set the fuel injection interval (Di) so that the fuel injection interval (Di) is greater than or equal to a lower limiting value resulting from the time required to drive the fuel injection valve (12).

5. A fuel injection control device for a direct injection engine according to at least one of the claims 1 to 4, **characterized in that** the controller (15) comprises a microprocessor.

6. A fuel injection control device for a direct injection engine according to at least one of the claims 1 to 5, **characterized in that** the controller (15) stores a map specifying a relation between the engine rotation speed and the required fuel injection interval (Di) as follows:
the required fuel injection interval decreases with increase in the engine rotation speed when the engine rotation speed is in the range from a first speed (N1) to a second speed (N2), the required fuel injection interval is the lower limiting value (β) determined based on the upper limiting value for fuel pressure when the engine rotation speed is in the range from the second speed (N2) to a third speed (N3), and the required fuel injection interval is the lower limiting value resulting from the time required to drive the fuel injection valve (12) when the engine rotation speed is in the range from the third speed (N3) to a fourth speed (N4);
the controller (15) further sets the fuel injection interval (Di) to the required fuel injection interval based on the map.

7. A fuel injection control device for a direct injection engine according to at least one of the claims 1 to 6, **characterized in that** the controller (15) stores a map specifying a relation between the engine rotation speed and the target fuel pressure (tFp) for fuel supplied to the fuel injection valve (12) as follows:
the target fuel pressure increases with increase in the engine rotation speed when the engine rotation speed is in the range from a first speed (N1) to a second speed (N2), the target fuel pressure is an upper limiting value (Fpmax) when the engine rotation speed is in the range from the second speed (N2) to a third speed (N3), and the target fuel pressure decreases with increase in the engine rotation speed when the engine rotation speed is in the range from the third speed (N3) to a fourth speed (N4);
the controller (15) further sets the fuel pressure to the target fuel pressure (tFp) based on the map.

8. A fuel injection control method for a direct injection engine (1) which performs stratified charge combustion in a predetermined operating region and which is provided with a spark plug (7) for igniting an air-fuel mixture in the cylinder (4), and a fuel injection valve (12) for injecting fuel into the cylinder (4), the control method comprising:
detecting an engine rotation speed;
outputting a fuel injection pulse signal for opening a fuel injection valve (12) during the compression stroke; the fuel injection pulse signal comprising a first injection pulse and a second injection pulse, and
setting a fuel injection interval (Di) which is the interval between the first fuel injection pulse and the second fuel injection pulse, wherein
a second mixture cloud (22) produced by a fuel spray injected on the basis of the second fuel injection pulse follows after and is superimposed on a first mixture cloud (21) produced by a fuel spray injection on the basis of the first fuel injection pulse, the two mixture clouds being superimposed in proximity to a spark plug at the ignition timing, **characterized in that**
the first injection pulse and the second injection pulse having substantially the same pulse width (T1, T2), and
said fuel injection interval (Di) is set in response to an engine rotation speed so that the fuel injection interval (Di) is greater than or equal to a lower limiting value (β) determined based on an upper limiting value for fuel pressure (Fpmax).

## Patentansprüche

1. Kraftstoffeinspritzungs- Steuervorrichtung für einen Direkteinspritzungsmotor (1), der eine geschichtete Ladungsverbrennung in einem vorbestimmten Betriebsbereich ausführt, wobei die Kraftstoffeinspritzungs- Steuervorrichtung mit einer Zündkerze (7) zum Zünden eines Luft- Kraftstoffgemisches in dem Zylinder (4) und mit einem Kraftstoffeinspritzventil (12) zum Einspritzen von Kraftstoff in den Zylinder (4) versehen ist, wobei die Steuervorrichtung aufweist:
einen Kurbelwinkelsensor (17) zum Erfassen einer Motordrehzahl; und eine Steuerung, die funktioniert zum:
Ausgeben eines Kraftstoffeinspritzimpuls- Signals zum Öffnen eines Kraftstoffeinspritzventils (12) während des Verdichtungshubes; wobei das Kraftstoffeinspritzimpuls- Signal einen ersten Einspritzimpuls und einen zweiten Einspritzimpuls aufweist, und
Festlegen eines Kraftstoffeinspritzintervalls (Di), das das Intervall zwischen dem ersten Einspritzimpuls und dem zweiten Einspritzimpuls ist, wobei
eine zweite Gemischwolke (22), erzeugt durch einen Kraftstoffspruhnebel, eingespritzt auf der Grundlage des zweiten Kraftstoffeinspritzimpulses, nachfolgt und
einer ersten Gemischwolke (21), erzeugt durch eine Kraftstoffsprühnebeleinspritzung auf der Grundlage des ersten Kraftstoffeinspritzimpulses, überlagert wird, wobei die zwei Gemischwolken (21, 22) in der Nähe zu einer Zündkerze (7) zum Zündzeitpunkt überlagert werden,
**dadurch gekennzeichnet, dass**
der erste Einspritzimpuls und der zweite Einspritzimpuls im Wesentlichen dieselbe Impulsbreite (T1, T2) haben; und
das Kraftstoffeinspritzintervall (Di) in Abhängigkeit von einer Motordrehzahl festgelegt wird, so dass das Kraftstoffeinspritzintervall (Di) größer als oder gleich zu einem unteren Grenzwert (β) ist, bestimmt auf der Grundlage eines oberen Grenzwertes für den Kraftstoffdruck (Fpmax)

2. Kraftstoffeinspritzungs- Steuervorrichtung für einen Direkteinspritzungsmotor nach Anspruch 1, **dadurch gekennzeichnet, dass** die Steuerung (15) außerdem funktioniert, zum:
Festlegen des Kraftstoffeinspritzintervalls (Di), so dass sich das Kraftstoffeinspritzintervall (Di) mit der Zunahme in der Motordrehazhl vergrößert.

3. Kraftstoffeinspritzungs- Steuervorrichtung für einen Direkteinspritzungsmotor nach Anspruch 1, **dadurch gekennzeichnet, dass** die Steuerung (15) außerdem funktioniert, zum:
Festlegen eines Krafstoffdruckes (tFp) für Kraftstoff, der dem Kraftstoffeinspritzventil (12) auf der Grundlage der Motordrehzahl zugeführt wird, um dem Kraftstoffeinspritzintervall (Di) zu ermöglichen, den festgelegten Kraftstoffdruck (tFp) mit dem Vermindern des Kraftstoffeinspritzintervalls (Di) in einen vorbestimmten Bereich der Motordrehzahl zu erhöhen.

4. Kraftstoffeinspritzungs- Steuervorrichtung für einen Direkteinspritzungsmotor nach Ansprüche 1 bis 3, **dadurch gekennzeichnet, dass** die Steuerung (15) außerdem funktioniert, zum:
Festlegen des Krafstoffeinspritzintervalls (Di), so dass das der Kraftstoffeinspritzintervall (Di) größer als oder gleich zu einem unteren Grenzwert ist, der aus der Zeit resultiert, die erforderlich ist, das Kraftstoffeinspritzventil (12) a,zutreiben.

5. Kraftstoffeinspritzungs- Steuervorrichtung für einen Direkteinspritzungsmotor nach zumindest einem der Ansprüche 1 bis 4, **dadurch gekennzeichnet, dass** die steuerung (15) einem Mikrorechner aufweist.

6. Kraftstoffeinspritzungs- Steuervorrichtung für einen Direkteinspritzungsmotor nach zumindest einem der Ansprüche 1 bis 5, **dadurch gekennzeichnet, dass** die steuerung (15) einen Plan speichert, der eine Beziehung zwischen der Motordrehzahl und dem erforderlichen Kraftstoffeinspritzintervall (Di) wie folgt spezifiziert:
das erforderliche Kraftstoffeinspritzintervall vermindert sich mit der Zunahme in der Motordrehzahl, wenn die Motordrehzahl in dem Bereich von einer ersten Drehzahl (N1) zu einer zweiten Drehzahl (N2) ist, das erforderliche Kraftstoffeinspritzintervall ist der untere Grenzwert (β), bestimmt auf der Grundlage des oberen Grenzwertes für den Kraftstoffdruck, wenn dir Motordrehzahl in dem Bereich der zweiten Drehzahl (N2) zu einer dritten (N3) ist, und das erforderliche Kraftstoffeinspritzintervall ist der untere Grenzwert, der aus der Zeit resultiert, die erforderlich ist, das Krafstoffeinspritzventil (12) anzuteiben, wen der Motordrehzahl in dem Bereich von der dritten Drehzahl (N3) zu einer vierten Drehzahl (N4) ist;
die Steuerung (15) außerdem das Kraftstoffeinspritzintervall (Di) auf das erforderliche Kraftstoffeinspritzintervall auf der Grundlage des Planes festlegt.

7. Kraftstoffeinspritzungs- Steuervorrichtung für einen Direkteinspritzungsmotor nach zumindest einem der Ansprüche 1 bis 6, **dadurch gekennzeichnet, dass** die Steuerung (15) einen Plan speichert, der eine Beziehung zwischen der Motordrehzahl und dem Ziel- Kraftstoffdruck (tFp) für den Kraftstoff, zugeführt in das Kraftstoffeinspritzventil (12), wie folgt spezifiziert:
der Ziel- Kraftstoffdruck erhöht sich mit der Erhöhung in der Motordrehzahl, wenn die Motordrehzahl in dem bereich von einer ersten Drehzahl (N 1) zu einer zweiten Drehzahl (N2) ist, der Ziel- Kraftstoffdruck ist ein oberer Grenzwert (Fpmax),
wenn die Motordrehzahl in dem Bereich von der zweiten Drehzahl (N2) zu einer dritten Drehzahl (N3) ist, und der Ziel- Kraftstoffdruck sich mit der Zunahme in der Motordrehzahl vermindert, wenn die Motordrehzahl in dem Bereich von der dritten Drehzahl (N3) zu einer vierten Drehzahl (N4) ist;
die Steuerung (15) außerdem den Kraftstoffdruck auf den Ziel- Kraftstoffdruck (tFp) auf der Grundlage des Plans festlegt.

8. Kraftstoffeinspritzungs- Steuerverfahren für einen Direkteinspritzungsmotor (1), der eine geschichtete Ladungsverbrennung in einem vorbestimmten Betriebsbereich ausführt und der mit einer Zündkerze (7) zum Zünden eines Luft- Kraftstoffgemischs in dem Zylinder (4) und einem Kraftstoffeinspritzventil zum Einspritzen von Kraftstoff in den Zylinder (4) versehen ist, wobei das Steuerverfahren aufweist:
Erfassen einer Motordrehzahl;
Ausgeben eines Kraftstoffeinspritzimpuls- Signals für das Öffnen eines Kraftstoffeinspritzventils (12) während des Verdichtungshubes; wobei das Kraftstoffeinspritzimpuls- Signal einen ersten Einspritzimpuls und einen zweiten Einspritzimpuls aufweist und
Festlegen eines Kraftstoffeinspritzintervalls (Di), das das Intervall zwischen dem ersten Kraftstoff- Einspritzimpuls und dem zweiten Kraftstoff- Einspritzimpuls ist, wobei eine zweite Gemischwolke (22), erzeugt durch einen Kraftstoffspruhnebel, eingespritzt auf der Grundlage des zweiten Kraftstoff- Einspritzimpulses nachfolgt und einer ersten Gemischwolke (21), erzeugt durch einen Kraftstoffsprühnebel- Einspritzung auf der Grundlage der ersten Kraftstoff- Einspritzimpulses, überlagert wird, wobei die zwei Gemischwolken in der Nähe zu einer ündkerze zum Zündzeitpunkt überlagert werden, **dadurch gekennzeichnet, dass** der erste Einspritzimpuls und der Zweite Einspritzimpuls im Wesentlichen dieselbe Impulsbreite (T1, T2) haben; und
das Kraftstoffeinspritzintervall (Di) in Abhängigkeit von einer Motordrehzahl festgelegt wird, so dass Kraftstoffeinspritzintervall (Di) größer als oder gleich zu einem unteren Grenzwert (β) ist, bestimmt auf der Grundlage eines oberen Grenzwertes für den Kraftstoffdruck (Fpmax).

## Revendications

1. Dispositif de commande de l'injection de carburant pour un moteur à injection directe (1) qui réalise une combustion à charge stratifiée dans une zone de fonctionnement prédéterminée, le dispositif de commande de l'injection de carburant étant muni d'une bougie d'allumage (7) pour allumer un mélange air-carburant dans le cylindre (4) et d'une soupape d'injection de carburant (12) pour injecter du carburant dans le cylindre (4), le dispositif de commande comprenant:
un capteur d'angle de vilebrequin (17) pour détecter une vitesse de rotation du moteur et un contrôleur fonctionnant pour:
émettre un signal d'impulsion de l'injection de carburant pour ouvrir une soupape d'injection de carburant (12) pendant la course de compression, le signal d'impulsion de l'injection de carburant comprenant une première impulsion d'injection et une deuxième impulsion d'injection; et
fixer un intervalle d'injection de carburant (Di) qui est l'intervalle entre la première impulsion de l'injection de carburant et la deuxième impulsion de l'injection de carburant; où
un deuxième nuage de mélange (22) produit par un jet de carburant injecté sur la base de la deuxième impulsion de l'injection de carburant suit ensuite et se superpose à un premier nuage de mélange (21) produit par une injection d'un jet de carburant sur la base de la première impulsion de l'injection de carburant, les deux nuages de mélange (21, 22) se superposant à proximité d'une bougie d'allumage (7) au moment de l'allumage;
**caractérisé en ce que**:
la première impulsion d'injection et la deuxième impulsion d'injection ont sensiblement la même largeur d'impulsion (T1, T2); et
ledit intervalle d'injection de carburant (Di) est fixé en réaction à une vitesse de rotation du moteur de telle sorte que l'intervalle d'injection de carburant (D1) est supérieur ou égal à une valeur limite inférieure (β) déterminée sur la base d'une valeur limite supérieure de la pression du carburant (Fpmax).

2. Dispositif de commande de l'injection de carburant pour un moteur à injection directe selon la revendication 1, **caractérisé en ce que** le contrôleur (15) fonctionne en outre pour :
fixer l'intervalle d'injection de carburant (Di) de telle sorte que l'intervalle d'injection de carburant (Di) augmente à mesure que la vitesse de rotation du moteur diminue.

3. Dispositif de commande de l'injection de carburant pour un moteur à injection directe selon l'une des revendications 1 ou 2, **caractérisé en ce que** le contrôleur (15) fonctionne en outre pour : fixer une pression de carburant (tFp) pour le carburant fourni à la soupape d'injection de carburant (12) sur la base de la vitesse de rotation du moteur afin de rendre possible l'intevralle d'injection de carburant (Di), la pression de carburant fixée (tFp) augmentant à mesure que l'intevralle d'injection de carburant (Di) diminue dans une marge prédéterminée de la vitesse de rotation du moteur.

4. Dispositif de commande de l'injection de carburant pour un moteur à injection directe selon au moins l'une des revendications 1 à 3, **caractérisé en ce que** le contrôleur (15) fonctionne en outre pour :
fixer l'intervalle d'injection de carburant (Di) de telle sorte que l'intervalle d'injection de carburant (Di) soit supérieur ou égal à une valeur inférieure résultant du temps nécessaire à l'entraînement de la soupape d'injection de carburant (12).

5. Dispositif de commande de l'injection de carburant pour un moteur à injection directe selon au moins l'une des revendications 1 à 4, **caractérisé en ce que** le contrôleur (15) comprend un microprocesseur.

6. Dispositif de commande de l'injection de carburant pour un moteur à injection directe selon au moins l'une des revendications 1 à 5, **caractérisé en ce que** le contrôleur (15) enregistre un graphique indiquant une relation entre la vitesse de rotation du moteur et l'intervalle d'injection de carburant requis (Di) comme suit:
l'intervalle d'injection de carburant requis diminue à mesure que la vitesse de rotation du moteur augmente lorsque la vitesse de rotation du moteur se situe dans la marge d'une première vitesse (N1) à une deuxième vitesse (N2), l'intervalle d'injection de carburant requis est la valeur limite inférieure (β) déterminée sur la base de la valeur limite supérieure de la pression de carburant lorsque la vitesse de rotation du moteur se situe dans la marge de la deuxième vitesse (N2) à une troisième vitesse (N₃), et l'intervalle d'injection de carburant requis est la valeur limite inférieure résultant du temps nécessaire à l'entraînement de la soupape d'injection de carburant (12) lorsque la vitesse de rotation du moteur se situe dans la marge de la troisième vitesse (N3) à une quatrième vitesse (N4) ;
le contrôleur (15) fixe en outre l'intervalle d'injection de carburant (Di) à l'intervalle d'injection de carburant requis sur la base du graphique.

7. Dispositif de commande de l'injection de carburant pour un moteur à injection directe selon au moins l'une des revendications 1 à 6, **caractérisé en ce que** le contrôleur (15) enregistre un graphique indiquant une relation entre la vitesse de rotation du moteur et la pression de carburant cible (tFp) pour le carburant fourni à la soupape d'injection de carburant (12) comme suit:
la pression de carburant cible augmente à mesure que la vitesse de rotation du moteur augmente lorsque la vitesse de rotation du moteur se situe dans la marge d'une première vitesse (N1) à une deuxième vitesse (N2), la pression de carburant cible est une valeur de limite supérieure (Fpmax) lorsque la vitesse de totation du moteur se situe dans la marge de la deuxième vitesse (N2) à une troisième vitesse (N3), et la pression du carburant cible diminue à mesure que la vitesse de rotation du moteur augmente lorsque la vitesse de rotation du moteur se situe dans la marge de la troisième vitesse (N3) à une quatrième vitesse (N4) ;
le contrôleur (15) fixe en outre la pression de carburant à la pression de carburant cible (tFp) sur la base du graphique.

8. Procédé de commande de l'injection de carburant pour un moteur à injection directe (1) qui réalise une combustion à charge stratifiée dans une zone de fonctionnement prédéterminée et qui est muni d'une bougie d'allumage (7) pour allumer un mélange air-carburant dans le cylindre (4) et d'une soupape d'injection de carburant (12) pour injecter du carburant dans le cylindre (4), le procédé de commande comprenant les étapes consiste à:
détecter une vitesse de rotation du moteur ;
émettre un signal d'impulsion de l'injection de carburant pour ouvrir une soupape d'injection de carburant (12) pendant la course de compression, le signal d'impulsion de l'injection de carburant comprenant une première impulsion d'injection et une deuxième impulsion d'injection ; et
fixer un intervalle d'injection de carburant (Di) qui est l'intervalle entre la première et la deuxième impulsion de l'injection de carburant et la deuxième impulsion de l'injection de carburant ; où
un deuxième nuage de mélange (22) produit par un jet de carburant injecté sur la base de la deuxième impulsion de l'injection de carburant suit ensuite et se superpose à un premier nuage de mélange (21) produit par une injection d'un jet de carburant sur la base de la première impulsion de l'injection de carburant, les deux nuages de mélange se superposant à proximité d'une bougie d'allumage au moment de l'allumage;
**caractérisé en ce que**:
la première impulsion d'injection et la deuxième impulsion d'injection ont sensiblement la même largeur d'impulsion (T1, T2); et
ledit intervalle d'injection de carburant (Di) est fixé en réaction à une vitesse de rotation du moteur de telle sorte que l'intervalle d'injection de carburant (Di) est supérieur ou égal à une valeur limite inférieure (β) déterminée sur la base d'une valeur limite supérieure de la pression du carburant (Fpmax).
